# EUROPEAN PATENT SPECIFICATION

(11) **EP 2 087 061 B1**
(45) Date of publication and mention of the grant of the patent: **22.08.2012**
(21) Application number: 07853101.9
(22) Date of filing: 01.11.2007
(51) Int. Cl.: C09K 3/14, C09G 1/02

(54) **CMP OF COPPER/RUTHENIUM/TANTALUM SUBSTRATES**
CMP AUS KUPFER-/RUTHENIUM-/TANTALUM-SUBSTRATEN
PCM DE SUBSTRATS À BASE DE CUIVRE/RUTHÉNIUM/TANTALE

(30) Priority: 02.11.2006 US 591730
(43) Date of publication of application: 12.08.2009
(73) Proprietor: Cabot Microelectronics Corporation, Aurora, Illinois 60504 (US)
(72) Inventor: BRUSIC, Vlasta, Aurora, Illinois 60504 (US); ZHOU, Renjie, Aurora, Illinois 60504 (US); THOMPSON, Christopher, Aurora, Illinois 60504 (US); FEENEY, Paul, Aurora, Illinois 60504 (US)
(74) Representative: Liesegang, Eva
(86) International application number: PCT/US2007/023576
(87) International publication number: WO 2008/057593

(56) References cited:
- US-A- 5 156 672
- US-A- 6 083 840
- US-A1- 2003 234 184
- US-A1- 2004 007 690
- US-A1- 2005 056 368
- US-A1- 2006 180 788
- US-B1- 6 248 143

## Description

The invention pertains to chemical-mechanical polishing compositions and methods.

### BACKGROUND OF THE INVENTION

Compositions and methods for planarizing or polishing the surface of a substrate, especially for chemical-mechanical polishing (CMP), are well known in the art. Polishing compositions (also known as polishing slurries) used in CMP processes typically contain an abrasive material in an aqueous solution and are applied to a surface by contacting the surface with a polishing pad saturated with the polishing composition. Typical abrasive materials include aluminum oxide, cerium oxide, silicon dioxide, and zirconium oxide. The polishing composition typically is used in conjunction with a polishing pad (e.g., polishing cloth or disk). The polishing pad may contain abrasive material in addition to, or instead of, the abrasive material in the polishing composition.

Polishing compositions for silicon dioxide-based inter-metal dielectric layers have been particularly well developed in the semiconductor industry, and the chemical and mechanical nature of polishing and wear of the silicon dioxide-based dielectrics is reasonably well understood. One problem with the silicon dioxide-based dielectric materials, however, is that their dielectric constant is relatively high, being approximately 3.9 or higher, depending on factors such as residual moisture content. As a result, the capacitance between the conductive layers is also relatively high, which in turn limits the speed (frequency) at which a circuit can operate. Strategies being developed to increase the frequency at which the circuit can operate include (1) incorporating metals with lower resistivity values (e.g., copper), and (2) providing electrical isolation with insulating materials having lower dielectric constants relative to silicon dioxide.

One way to fabricate planar copper circuit traces on a dielectric substrate is referred to as the damascene process. In accordance with this process, the silicon dioxide dielectric surface is patterned by a conventional dry etch process to form holes (i.e., vias) and trenches for vertical and horizontal interconnects prior to deposition of copper onto the surface. Copper has the property of being a fast diffuser during the thermal cycling that a semiconductor substrate experiences during the fabrication process, as well as during actual device operation under applied electric fields, and can move quickly through the underlying dielectric layer and overlying interlevel dielectric (ILD) layers to "poison" the device. Thus, a diffusion barrier layer is typically applied to the substrate before deposition of copper. Copper diffusion through the substrate dielectric material results in current leakage between adjacent metal lines, leading to degraded device characteristics and, potentially, non-functioning devices. The diffusion barrier layer is provided with a copper seed layer and then over-coated with a copper layer from a copper plating bath. Chemical-mechanical polishing is employed to reduce the thickness of the copper over-layer, as well as the thickness of the diffusion barrier layer, until a planar surface that exposes elevated portions of the dielectric surface is obtained. The vias and trenches remain filled with electrically conductive copper forming the circuit interconnects.

Tantalum and tantalum nitride have found wide acceptance in the industry as barrier layer materials and are typically applied to a substrate by physical vapor deposition (PVD). However, as the lines defining circuits are being reduced in size to the 65 nm and 45 nm scale, one concern is to avoid degrading the current carrying capacity of the copper lines. As the dimensions of copper lines are reduced, electron scattering from the lines becomes significant and causes an increase in resistivity. One solution is to reduce the thickness of the barrier layer and thereby allow for a proportionately thicker copper line within a given trench by using an atomic layer deposited (ALD) barrier layer. A copper seed layer is then applied by a conventional PVD process. However, formation of the copper seed layer is complicated by the need to provide a precise thickness of the layer to avoid overhang at the top of trenches with overly thick layers and to avoid copper oxidation by atmospheric oxygen occurring with overly thin layers.

One proposed solution is to plate copper directly onto a diffusion barrier layer. Ruthenium, in particular, has shown promise in this application. The insolubility of copper in ruthenium makes ruthenium suitable for use as a diffusion barrier, and the electrical conductivity of ruthenium allows for direct plating of copper onto the ruthenium, which obviates the need for a copper seed layer. Although the possibility of replacing tantalum/tantalum nitride barriers layers with ruthenium remains an attractive possibility, the likely course of development appears to lie with a copper-ruthenium-tantalum/tantalum nitride system.

Polishing compositions that have been developed for ruthenium and other noble metals typically contain strong oxidizing agents, have a low pH, or both. Copper tends to oxidize very rapidly in these polishing compositions. Additionally, because of the difference in standard reduction potentials of ruthenium and copper, copper suffers from galvanic attack by ruthenium in the presence of conventional ruthenium polishing compositions. The galvanic attack leads to etching of copper lines and a resulting degradation of circuit performance. Further, the wide difference in chemical reactivity of copper and ruthenium in conventional polishing compositions results in widely differing rates of removal in chemical-mechanical polishing of substrates containing both metals, which can result in overpolishing of copper during ruthenium barrier polishing.

US 2004/0007690 discloses methods and polishing compositions for controllably polishing fiber optic connectors. The disclosed polishing compositions contain various ingredients, including, inter alia, particulate abrasives, oxidizing agents, organic acids, and various other components. A composition comprising, inter alia, amphiphilic non-ionic surfactants is not disclosed.

US 2005/0056368 describes polishing compositions comprising silica particles, alkaline earth metals, oxidizing agents and a liquid carrier. A composition comprising, inter alia, amphiphilic non-ionic surfactants is not disclosed.

US 2006/0180788 discloses compositions for chemical-mechanical polishing comprising at least one abrasive particle having a surface at least partially coated by an activator. Compositions comprising, inter alia, amphiphilic non-ionic surfactants are not disclosed.

US 2003/0234184 discloses polishing compositions and methods for removing conductive materials from a substrate surface. The compositions include an acid-based electrolyte system, one or more chelating agents, one or more corrosion inhibitors, one or more inorganic or organic acid salts, one or more pH adjusting agents, a polishing enhancing material, one or more oxidizers, and a solvent. Compositions comprising, inter alia, amphiphilic non-ionic surfactants are not disclosed.

Substrates comprising tantalum or tantalum nitride in addition to ruthenium and copper pose additional challenges in that polishing compositions suitable for ruthenium or copper, themselves highly dissimilar materials, are typically unsuitable for the polishing of tantalum or tantalum nitride layers. Polishing compositions suitable for use in the polishing of tantalum or tantalum nitride barrier layers tend to chemically attack copper remaining in the circuit lines, which can lead to dishing of the circuit lines. Dishing of circuit lines can lead to discontinuities in the circuits and to nonplanarity of the substrate surface, complicating further processing steps. Successful implementation of ruthenium-copper-tantalum microelectronic technology would require new polishing methods suitable for the polishing of all three materials.

Thus, there remains a need in the art for improved polishing compositions and methods for chemical-mechanical polishing of substrates comprising ruthenium and copper and optionally tantalum or tantalum nitride.

### BRIEF SUMMARY OF THE INVENTION

The invention provides a chemical-mechanical polishing composition and a method of chemically-mechanically polishing a substrate in accordance with the appended claims. The invention provides a chemical-mechanical polishing composition According to the claims, said composition comprising (a) 0.01 wt.% to 10 wt.% of an abrasive, (b) 0.01 wt.% to 10 wt.% of an oxidizing agent, (c) 1 ppm to 5000 ppm of an amphiphilic nonionic surfactant comprising a head group and a tail group, (d) 1 ppm to 500 ppm of calcium ion or magnesium ion, (e) 0.001 wt.% to 0.5 wt.% of a corrosion inhibitor for copper, and (f) water, wherein the pH of the polishing composition is 6 to 12.

The invention also provides a method of chemically-mechanically polishing a substrate according to the claims, which method comprises (i) providing a substrate, (ii) providing a chemical-mechanical polishing composition comprising (a) 0.01 wt.% to 10 wt.% of an abrasive, (b) 0.01 wt.% to 10 wt.% of an oxidizing agent, (c) 1 ppm to 5000 ppm of an amphiphilic nonionic surfactant comprising a head group and a tail group, (d) 1 ppm to 500 ppm of calcium ion or magnesium ion, (e) 0.001 wt.% to 0.5 wt.% of a corrosion inhibitor for copper, and (f) water, wherein the pH of the polishing composition is 6 to 12, (iii) contacting the substrate with a polishing pad with the polishing composition therebetween, (iv) moving the polishing pad and polishing composition relative to the substrate, and (iv) abrading at least a portion of the substrate to polish the substrate.

In a first embodiment of the method according to the present invention, the substrate comprises at least one layer of copper, at least one layer of ruthenium, and at least one layer of tantalum, wherein at least one ruthenium layer is disposed between at least one copper layer and at least one tantalum layer.

The abrasive comprises α-alumina.

In a further embodiment of the previous embodiment, the α-alumina is treated with a negatively- charged polymer or copolymer selected from the group consisting of poly(2-acrylamido-2-methylpropane sulfonic acid) and polystyrenesulfonic acid.

The abrasive may further comprise silica.

In a further embodiment of the first embodiment, the oxidizing agent is hydrogen peroxide, wherein the polishing composition comprises 0.1 wt.% to 5 wt.% of hydrogen peroxide.

In another further embodiment of the first embodiment, the polishing composition further comprises an organic acid selected from the group consisting of malonic acid, succinic acid, adipic acid, lactic acid, malic acid, citric acid, glycine, aspartic acid, gluconic acid, iminodiacetic acid, fumaric acid, and combinations thereof.

In another preferred embodiment, the polishing composition further comprises tartaric acid.

In a further embodiment of the first embodiment, the amphiphilic nonionic surfactant is a block or graft copolymer comprising polyoxyethylene and polyethylene.

In a further embodiment of the previous embodiment, the amphiphilic nonionic surfactant has a HLB or 8 or more.

In another embodiment of the penultimate embodiment, the amphiphilic nonionic surfactant has a molecular weight of 5,000 Daltons or more.

According to another preferred embodiment of the first embodiment, the corrosion inhibitor for copper is at least one heterocyclic compound selected from the group consisting of benzotriazole, 4-methylbenzotriazole, 5-methylbenzotriazole, 5-chlorobenzotriazole, and combinations thereof.

Further to the previous embodiment, in another embodiment of the method according to the present invention, the corrosion inhibitor for copper is benzotriazole, wherein the polishing composition comprises 0.005 wt.% to 0.1 wt.% of benzotriazole.

According to a further embodiment of the first embodiment, the polishing composition comprises 5 ppm to 250 ppm of calcium ion.

According to another further embodiment of the first embodiment, the polishing composition further comprises ammonium hydroxide.

According to a further embodiment of the first embodiment, the pH of the polishing composition is 7 to 9.

According to a still further embodiment of the first embodiment, at least one layer of ruthenium and at least one layer of copper are in electrical contact, wherein the difference between the open circuit potential of copper and the open circuit potential of ruthenium in the polishing composition is 50 mV or less.

In a further embodiment of the first embodiment, at least a portion of at least one tantalum layer is abraded to polish the substrate.

### DETAILED DESCRIPTION OF THE INVENTION

The invention provides a chemical-mechanical polishing composition in accordance with the claims. The polishing composition according to the claims comprises (a) 0.01 wt.% to 10 wt.% of an abrasive, (b) 0.01 wt.% to 10 wt.% of an oxidizing agent, (c) 1 ppm to 5000 ppm of an amphiphilic nonionic surfactant comprising a head group and a tail group, (d) 1 ppm to 500 ppm of calcium ion or magnesium ion, (e) 0.001 wt.% to 0.5 wt.% of a corrosion inhibitor for copper, and (f) water, wherein the pH of the polishing composition is 6 to 12.

The abrasive comprises, The abrasive also can comprise other forms of alumina, such as fumed alumina. The abrasive particles typically have an average particle size (e.g., average particle diameter) of 20 nm to 500 nm. Preferably, the abrasive particles have an average particle size of 30 nm to 400 nm (e.g., 40 nm to 300 nm, or 50 nm to 250 nm, or 75 nm to 200 nm). In this regard, particle size refers to the diameter of the smallest sphere that encloses the particle.

The polishing composition typically comprises 0.01 wt.% or more (e.g., 0.1 wt.%) of abrasive. Preferably, the polishing composition comprises 10 wt.% or less (e.g., 8 wt.% or less, or 6 wt% or less) of abrasive. More preferably, the polishing composition comprises 0.01 wt.% to 10 wt.% of abrasive (e.g., 0.1 wt.% to 6 wt.%) of abrasive.

At least a portion of the α-alumina can be treated with a negatively-charged polymer or copolymer. For example, 5 wt.% or more (e.g., 10 wt.% or more, or 50 wt.% or more, or substantially all, or all) of the α-alumina can be treated with a negatively-charged polymer or copolymer. The negatively-charged polymer or copolymer can be any suitable polymer or copolymer. Preferably, the negatively-charged polymer or copolymer comprises repeating units selected from the group consisting of carboxylic acid, sulfonic acid, and phosphonic acid functional groups. More preferably, the anionic polymer comprises repeating units selected from the group consisting of acrylic acid, methacrylic acid, itaconic acid, maleic acid, maleic anhydride, vinyl sulfonic acid, 2-(methacryloyloxy)ethanesulfonic acid, styrene sulfonic acid, 2-acrylamido-2-methylpropane sulfonic acid, vinylphosphonic acid, 2-(methacroyloxy)ethylphosphate, and combinations thereof. Most preferably, the negatively-charged polymer or copolymer is selected from the group consisting of poly(2-acrylamido-2-methylpropane sulfonic acid) and polystyrenesulfonic acid.

The α-alumina can be treated with a negatively-charged polymer or copolymer at any suitable time. For example, the α-alumina can be treated with a negatively-charged polymer or copolymer in a separate step to prepare pretreated α-alumina prior to addition of the pretreated α-alumina to the other components of the polishing composition. In another embodiment, the negatively-charged polymer or copolymer can be separately added to the polishing composition before, during, or after addition of the α-alumina to the polishing composition.

In some embodiments, the abrasive comprises a mixture of α-alumina and silica. The characteristics of the α-alumina are as set forth herein. The silica can be any suitable form of silica, such as fumed silica or precipitated silica. Preferably, the silica is a condensation-polymerized silica. Condensation-polymerized silica includes silica prepared by sol-gel processes and by hydrothermal processes. Non-limiting examples of suitable silica include commercially available products from Eka Chemicals (Binzil silicas), Nissan Chemical (Snowtex silicas), Nyacol Nano Technologies (NexSil silicas), and Fuso Chemical (PL series silicas). The presence of silica in the inventive polishing composition results in an increase in removal rates observed with tantalum and silicon oxide-based dielectric and a decrease in removal rates observed with copper and ruthenium when used to polish the same.

The amount of silica present in the polishing composition is not particularly limited, provided that the total amount of α-alumina and silica is as set forth herein for the amount of abrasive in the polishing composition.

The abrasive of any of the embodiments described herein can be colloidally stable. The term "colloid" refers to the suspension of abrasive particles in the liquid carrier. The term "colloidal stability" refers to the maintenance of that suspension through time. In the context of this invention, an abrasive is considered colloidally stable if, when the abrasive is placed into a 100 ml graduated cylinder and allowed to stand unagitated for a time of 2 hours, the difference between the concentration of particles in the bottom 50 ml of the graduated cylinder ([B] in terms of g/ml) and the concentration of particles in the top 50 ml of the graduated cylinder ([T] in terms of g/ml) divided by the initial concentration of particles in the abrasive composition ([C] in terms of g/ml) is less than or equal to 0.8 (i.e., {[B] - [T]}/[C] ≤ 0.8).

The polishing composition comprises an oxidizing agent. The function of the oxidizing agent is to oxidize at least a part of a substrate, such as a layer or layers comprising copper, ruthenium and/or tantalum. The oxidizing agent can be any suitable oxidizing agent. Non-limiting examples of suitable oxidizing agents include hydrogen peroxide, persulfate salts (e.g., ammonium persulfate), ferric salts (e.g., ferric nitrate), solid forms of hydrogen peroxide, and combinations thereof. Solid forms of hydrogen peroxide include sodium percarbonate, calcium peroxide, and magnesium peroxide, which liberate free hydrogen peroxide when dissolved in water. Preferably, the oxidizing agent is hydrogen peroxide.

The polishing composition can comprise any suitable amount of oxidizing agent. Typically the polishing composition comprises 0.01 wt.% or more (e.g., 0.1 wt.% or more, or 0.5 wt.% or more) oxidizing agent. Preferably, the polishing composition comprises 10 wt.% or less (e.g., 8 wt.% or less, or 5 wt.% or less) oxidizing agent. More preferably, the polishing composition comprises 0.01 wt.% to 8 wt.% (e.g., 0.1 wt.% to 5 wt.%) oxidizing agent.

The amphiphilic nonionic surfactant is a surfactant having a hydrophilic portion and a hydrophobic portion. For the purposes of this invention, the amphiphilic nonionic surfactant is defined as having a head group and a tail group. The head group is the hydrophobic portion of the surfactant, and the tail group is the hydrophilic portion of the surfactant. Any suitable head group and any suitable tail group can be used. The amphiphilic nonionic surfactant can comprise any suitable combination of head groups and tail groups. For example, the amphiphilic nonionic surfactant can comprise only one head group in combination with one tail group, one head group in combination with two or more tail groups, or, in some embodiments, can comprise multiple (e.g., 2 or more) head groups and/or multiple (e.g., 2 or more) tail groups. Preferably, the amphiphilic nonionic surfactant is water-soluble.

The head group can be any suitable group that is substantially hydrophobic. For example, suitable head groups include polysiloxanes, tetra-C₁₋₄-alkyldecynes, saturated or partially unsaturated C₆₋₃₀ alkyls, polyoxypropylenes, C₆₋₁₂ alkyl phenyls or cyclohexyls, polyethylenes, or mixtures thereof. The saturated or partially unsaturated C₆₋₃₀ alkyls optionally can be substituted with functional groups, such as short chain (C₁₋₅) alkyls, C₆₋₃₀ aryls, short chain (C₁₋₅) fluorocarbons, hydroxyl groups, halo groups, carboxylic acid groups, ester groups, amine groups, amide groups, glycol groups, and the like. Preferably, when the head group is a saturated or partially unsaturated C₆₋₃₀ alkyl, the degree of substitution with hydrophilic groups is very low (e.g., fewer than 3, or fewer than 2 hydrophilic groups). More preferably, the head group is not substituted with hydrophilic groups (e.g., hydroxyl groups and carboxylic acid groups).

The tail group can be any suitable group that is substantially hydrophilic. For example, suitable tail groups include those comprising a polyoxyethylene group, preferably having 4 or more (e.g., 8 or more, or even 10 or more) ethylene oxide repeating units, a sorbitan group, highly substituted saturated or partially unsaturated C₆₋₃₀ alkyls, a polyoxyethylenesorbitan group, or a mixture thereof. The highly substituted saturated or partially unsaturated C₆₋₃₀ alkyls preferably are substituted with hydrophilic functional groups, such as hydroxyl groups and carboxylic acid groups.

The amphiphilic nonionic surfactant can be an acetylenic glycol surfactant comprising a tetraalkyldecyne head group and an oxyethylene tail group, as in 2,4,7,9-tetramethyl-5-decyne-4,7-diol ethoxylate surfactants. The amphiphilic nonionic surfactant also can be selected from the group consisting of polyoxyethylene alkyl ethers and polyoxyethylene alkyl acid esters, wherein alkyl is a C₆₋₃₀ alkyl, which can be saturated or partially unsaturated, and is optionally branched. For example, the amphiphilic nonionic surfactant can be a polyoxyethylene lauryl ether, polyoxyethylene cetyl ether, polyoxyethylene stearyl ether, polyoxyethylene oleyl ether, polyoxyethylene monolaurate, polyoxyethylene monostearate, polyoxyethylene distearate, or polyoxyethylene monooleate. Similarly, the amphiphilic nonionic surfactant can be a polyoxyethylene alkylphenyl ether or a polyoxyethylene alkylcyclohexyl ether, wherein alkyl is a C₆₋₃₀ alkyl, can be saturated or partially unsaturated, and can be optionally branched, such as a polyoxyethylene octyl phenyl ether or a polyoxyethylene nonyl phenyl ether.

The amphiphilic nonionic surfactant can be a sorbitan alkyl acid ester or a polyoxyethylenesorbitan alkyl acid ester, wherein the alkyl is a C₆₋₃₀ alkyl, can be saturated or partially unsaturated, and can be optionally branched. Examples of such surfactants include sorbitan monolaurate, sorbitan monooleate, sorbitan monopalmitate, sorbitan monostearate, sorbitan sesquioleate, sorbitan trioleate, and sorbitan tristearate, as well as a polyoxyethylenesorbitan monolaurate, polyoxyethylenesorbitan monopalmitate, polyoxyethylenesorbitan monostearate, polyoxyethylenesorbitan tristearate, polyoxyethylenesorbitan monooleate, polyoxyethylenesorbitan trioleate, and polyoxyethylenesorbitan tetraoleate.

The amphiphilic nonionic surfactant can be a block or graft copolymer comprising polydimethylsiloxane and polyoxyethylene, polyoxyethylene and polyoxypropylene, or polyoxyethylene and polyethylene. In particular, block or graft copolymers comprising polyoxyethylene and polyoxypropylene are preferred amphiphilic nonionic surfactants.

Typically, the polishing composition comprises 10 ppm or more (e.g., 25 ppm or more, or 50 ppm or more) amphiphilic nonionic surfactant, based on the weight of the water and any compounds dissolved or suspended therein. Preferably, the polishing composition comprises 5000 ppm or less (e.g., 1000 ppm or less, or 500 ppm or less, or even 250 ppm or less) amphiphilic nonionic surfactant, based on the weight of the water and any compounds dissolved or suspended therein. More preferably, the polishing composition comprises 10 ppm to 1000 ppm (e.g., 25 ppm to 500 ppm, or 50 ppm to 250 ppm, or 75 ppm to 200 ppm) amphiphilic nonionic surfactant, based on the weight of the liquid carrier and any compounds dissolved or suspended therein.

The amphiphilic nonionic surfactant, or mixture of amphiphilic nonionic surfactants, typically has a hydrophilic-lipophilic balance (HLB) value of greater than 8 (e.g., 9 or greater, 10 or greater, 12 or greater, or even 14 or greater). The HLB value typically is 30 or less (e.g., 28 or less). For some embodiments, the HLB value preferably is greater than 8 and 30 or less (e.g., 10 to 28, or 12 to 26). The HLB value indicates the solubility of a surfactant in water and, thus, is related to the wt.% amount of the hydrophilic portion of the surfactant (e.g., the wt.% amount of ethylene oxide). The surfactant HLB value can be approximated, in some cases, for nonionic surfactants containing an ethylene oxide group as being equal to the wt.% amount of the ethylene oxide groups divided by 5. When a combination of amphiphilic nonionic surfactants is used in the polishing composition described herein, the HLB value for the combination of amphiphilic nonionic surfactants sometimes can be estimated as the weight average of the HLB values of each of the surfactants. For example, for a mixture of two amphiphilic nonionic surfactants S1 and S2, the HLB value is approximately equal to ((wt. S1 * HLB_{S1}) + (wt. S2 * HLB_{S2})) / (wt. S1 + wt. S2). A low HLB value indicates a lipophilic surfactant (i.e., having a small number of hydrophilic groups), and a high HLB value indicates a hydrophilic surfactant (having a high number of hydrophilic groups).

The amphiphilic nonionic surfactant typically has a molecular weight of 1100 g/mol or more and 20,000 g/mol or less. Preferably, the amphiphilic nonionic surfactant typically has a molecular weight of 2500 g/mol to 18,000 g/mol (e.g., 4,000 g/mol to 16,000 g/mol). More preferably, the amphiphilic nonionic surfactant typically has a molecular weight of 7,500 g/mol to 18,000 g/mol (e.g., 10,000 g/mol to 16,000 g/mol).

The polishing composition typically comprises 1 ppm or more (e.g., 10 ppm or more, or 20 ppm or more, or 30 ppm or more) of calcium ion or magnesium ion. Preferably, the polishing composition comprises 500 ppm or less (e.g., 400 ppm or less, or 300 ppm or less) of calcium or magnesium ion. More preferably, the polishing composition comprises 20 ppm to 400 ppm (e.g., 30 ppm to 300 ppm, or 40 ppm to 200 ppm) of calcium or magnesium ion. Advantageously, the presence of calcium ion or magnesium ion provides for an increase in the removal rate of tantalum layers exhibited by the inventive polishing composition as compared to the same polishing composition except for lacking the calcium ion or magnesium ion. The calcium ion or magnesium ion contained in the polishing composition can be provided by any suitable source of calcium ion or magnesium ion. Preferably, the calcium ion or magnesium ion contained in the polishing composition is provided by at least one water-soluble calcium salt or magnesium salt. Non-limiting examples of suitable calcium salts include calcium acetate and calcium chloride, hydrates thereof, and combinations thereof. Non-limiting examples of suitable magnesium salts include magnesium acetate, magnesium chloride, magnesium sulfate, hydrates thereof, and combinations thereof.

The polishing composition typically comprises 0.001 wt% or more (e.g., 0.01 wt.% or more, or 0.05 wt.% or more) of a corrosion inhibitor for copper. For the purposes of this invention, a corrosion inhibitor is any compound, or mixture of compounds, that facilitates the formation of a passivation layer (i.e., a dissolution-inhibiting layer) on at least a portion of the surface of the substrate being polished. A corrosion inhibitor for copper is any compound that facilitates the formation of a passivation layer on copper. Preferably, the polishing composition comprises 0.5 wt.% or less (e.g., 0.4 wt.% or less, or 0.3 wt.% or less) of a corrosion inhibitor for copper. More preferably, the polishing composition comprises 0.01 wt.% to 0.3 wt.% (e.g., 0.02 wt.% to 0.2 wt.%) of a corrosion inhibitor for copper. Preferably, the corrosion inhibitor for copper is a benzotriazole compound selected from the group consisting of benzotriazole, 4-methylbenzotriazole, 5-methylbenzotriazole, 5-chlorobenzotriazole, and combinations thereof. More preferably, the corrosion inhibitor for copper is benzotriazole.

The polishing composition optionally further comprises an organic acid. The organic acid can be any suitable organic acid. Typically, the organic acid is a carboxylic acid, for example, a mono-, di-, or tri-carboxylic acid. The organic carboxylic acid can further comprise functional groups selected from the group consisting of hydroxyl, carbonyl, amino, and halogen. Preferably, the organic acid is an organic carboxylic acid selected from the group consisting of malonic acid, succinic acid, adipic acid, lactic acid, malic acid, citric acid, glycine, aspartic acid, gluconic acid, iminodiacetic acid, fumaric acid, tartaric acid, and combinations thereof. More preferably, the organic acid is tartaric acid.

It will be appreciated that the aforementioned carboxylic acids can exist in the form of a salt (e.g., a metal salt, an ammonium salt, or the like), an acid, or as a partial salt thereof. For example, tartrates include tartaric acid, as well as mono- and di-salts thereof. Furthermore, carboxylic acids including basic functional groups can exist in the form of an acid salt of the basic functional group. For example, glycines include glycine, as well as acid salts thereof. Furthermore, some compounds can function both as an acid and as a chelating agent (e.g., certain amino acids and the like).

The polishing composition has a pH of 6 or more (e.g., 7 or more, or 8 or more). Preferably, the polishing composition has a pH of 12 or less (e.g., 11 or less, or 10 or less). More preferably, the polishing composition has a pH of 7 to 11 (e.g., 8 to 10). The polishing composition typically comprises pH adjusting agents, for example potassium hydroxide, ammonium hydroxide, or combinations thereof. Advantageously, the choice of pH adjusting agent can affect the relative removal rates observed for the polishing composition when used to polish a layer of copper, ruthenium, tantalum, or a dielectric material (e.g., silicon dioxide). For example, a polishing composition comprising ammonium hydroxide exhibits higher removal rates for copper and ruthenium layers and a lower removal for tantalum layers than a similar polishing composition comprising potassium hydroxide. Polishing compositions comprising a mixture of ammonium hydroxide and potassium hydroxide exhibit removal rates for copper, ruthenium, and tantalum layers intermediate to the removal rates observed for polishing compositions comprising ammonium hydroxide or potassium hydroxide alone. The polishing composition optionally comprises pH buffering systems, for example, a borate buffer.

The polishing composition optionally further comprises one or more other additives. Such additives include any suitable dispersing agent, such as, for example, acrylate polymers comprising one or more acrylic monomers (e.g., vinyl acrylates and styrene acrylates), combinations thereof, and salts thereof. Other suitable additives include biocides. The biocide can be any suitable biocide, for example, an isothiazolinone biocide.

The polishing composition can be prepared by any suitable technique, many of which are known to those skilled in the art. The polishing composition can be prepared in a batch or continuous process. Generally, the polishing composition can be prepared by combining the components thereof in any order. The term "component" as used herein includes individual ingredients (e.g., abrasive, oxidizing agent, amphiphilic nonionic surfactant, a corrosion inhibitor for copper, etc.) as well as any combination of ingredients (e.g., abrasive, oxidizing agent, amphiphilic nonionic surfactant, calcium ion or magnesium ion, a corrosion inhibitor for copper, an optional organic acid, etc.).

For example, the oxidizing agent, amphiphilic nonionic surfactant, calcium ion source or magnesium ion source, a corrosion inhibitor for copper, and optional organic carboxylic acid can be dissolved in water by the addition of the oxidizing agent, amphiphilic nonionic surfactant, calcium ion source or magnesium ion source, a corrosion inhibitor for copper, and optional organic carboxylic acid to water in any order, or even simultaneously. The abrasive then can be added and dispersed by any method that is capable of dispersing the abrasive in the polishing composition. The polishing composition can be prepared prior to use, with one or more components, such as the oxidizing agent, added to the polishing composition shortly before use (e.g., within 1 minute before use, or within 1 hour before use, or within 7 days before use). The pH can be adjusted at any suitable time, and is preferably adjusted prior to the addition of the abrasive to the polishing composition. The polishing composition also can be prepared by mixing the components at the surface of the substrate during the polishing operation.

The polishing composition also can be provided as a concentrate which is intended to be diluted with an appropriate amount of water and typically the oxidizing agent prior to use. If the oxidizing agent is a liquid, an appropriate volume of the oxidizing agent can be added to the water prior to dilution of the concentrate with the water, or an appropriate volume of the oxidizing agent can be added to the concentrate before, during, or after addition of the water to the concentrate. If the oxidizing agent is a solid, the oxidizing agent can be dissolved in the water or a portion thereof before dilution of the concentrate with the water and/or an aqueous solution of the oxidizing agent. A solid oxidizing agent also can be added as a solid to the concentrate before, during, or after dilution of the concentrate with the water to provide the polishing composition and then incorporated into the polishing composition by any method capable of incorporating the oxidizing agent into the polishing composition, such as by mixing. In such an embodiment, the polishing composition concentrate can comprise an abrasive, amphiphilic nonionic surfactant, calcium ion or magnesium ion, a corrosion inhibitor for copper, optional organic carboxylic acid and water in amounts such that, upon dilution of the concentrate with an appropriate amount of water and oxidizing agent, each component of the polishing composition will be present in the polishing composition in an amount within the appropriate range recited above for each component. For example, the abrasive, amphiphilic nonionic surfactant, calcium ion or magnesium ion, a corrosion inhibitor for copper, and optional organic carboxylic acid can each be present in the concentrate in an amount that is 2 times (e.g., 3 times, 4 times, or 5 times) greater than the concentration recited above for each component so that, when the concentrate is diluted with an equal volume of water (e.g., 2 equal volumes water, 3 equal volumes of water, or 4 equal volumes of water, respectively) and an appropriate amount of oxidizing agent, each component will be present in the polishing composition in an amount within the ranges set forth above for each component. Furthermore, as will be understood by those of ordinary skill in the art, the concentrate can contain an appropriate fraction of the water, along with optionally some or all of the oxidizing agent, present in the final polishing composition in order to ensure that the abrasive, oxidizing agent, calcium ion source or magnesium ion source, carboxylic acid, and other suitable additives are at least partially or fully dissolved in the concentrate, preferably fully dissolved in the concentrate.

Desirably, the difference between the open circuit potential of copper and the open circuit potential of ruthenium in the polishing composition is 50 mV or less (e.g., 40 mV or less). As is well known, two dissimilar metals which are in electrical contact, when immersed in or contacted with an electrolyte, form a galvanic cell. In a galvanic cell, a first metal, the anode, will corrode (e.g., oxidize) at a faster rate than it would in the absence of the second metal. Correspondingly, the second metal, the cathode, will corrode at a slower rate than it would in the absence of the first metal. The driving force for the corrosion process is the potential difference between the two metals, which is the difference in the open circuit potential of the two metals in the particular electrolyte. The open circuit potential of a metal in an electrolyte is a function of the nature of the electrolyte, which depends at least in part on the concentration of the components of the electrolyte, the pH, and the temperature of the system comprising the metal and the electrolyte. Thus, the potential difference of the two metals comprising the galvanic cell when the metals are in contact with an electrolyte will lead to production of a galvanic current. The magnitude of the galvanic current is directly related to the rate of corrosion suffered by the anodic component of the galvanic cell, which in this case is copper. Advantageously, when the open circuit potential difference of copper and ruthenium is less than 50 mV, the rate of corrosion of copper resulting from galvanic coupling with ruthenium is sufficiently reduced to allow for effective control over the copper polishing rate and to reduce copper etching by the polishing composition.

The open circuit potential of copper and of ruthenium in the polishing composition can be measured using any suitable method. A particularly useful method for determining electrochemical characteristics of metals is potentiodynamic polarization.

The invention further provides a method of chemically-mechanically polishing a substrate. The method comprises (i) providing a substrate, (ii) providing the polishing composition described herein, (iii) contacting the substrate with a polishing pad with the polishing composition therebetween, (iv) moving the polishing pad and polishing composition relative to the substrate, and (iv) abrading at least a portion of the substrate to polish the substrate.

Although the polishing composition of the invention can be used to polish any substrate, the polishing composition is particularly useful in the polishing of a substrate comprising at least one metal layer comprising copper, at least one metal layer comprising tantalum, at least one metal layer comprising ruthenium, and at least one dielectric layer. The metal layers can be disposed anywhere on the substrate, but preferably at least one copper layer and at least one ruthenium layer are in contact, and at least one tantalum layer is disposed between at least one ruthenium layer and at least one dielectric layer. The tantalum layer can comprise tantalum metal or can comprise a suitable tantalum-containing compound, such as tantalum nitride, or a mixture of tantalum metal and a tantalum-containing compound. When the tantalum layer comprises tantalum nitride, the tantalum nitride can comprise a stochiometric tantalum nitride (i.e., TaN) or a nonstochiometric tantalum nitride, for example, TaN_{0.5}. The tantalum layer also can comprise a tantalum-containing compound of tantalum with nitrogen and carbon represented by the formula TaNₓC_{y}, wherein x + y ≤ 1. The dielectric layer can be a metal oxide, porous metal oxide, glass, organic polymer, fluorinated organic polymer, or any other suitable high or low-k insulating layer, and preferably is a silicon-based metal oxide, more preferably a silicon oxide layer derived from tetraethylorthosilicate (TEOS).

The substrate can be any suitable substrate (e.g., an integrated circuit, metal, ILD layer, semiconductor, or thin film). Typically the substrate comprises a patterned dielectric layer having a barrier layer comprising tantalum deposited thereon, a layer of ruthenium deposited onto the barrier layer, and an overcoating layer comprising copper. For example, a silicon wafer can be coated with a layer of a dielectric material. Trenches and vias defining circuit lines and circuit interconnects can be etched into the dielectric layer, after which a layer of a barrier material such as tantalum is deposited thereon using either a physical vapor deposition (PVD) or an atomic layer deposition (ALD) process. A layer of ruthenium is applied onto the tantalum layer using an ALD process, a PVD process, or a chemical vapor deposition (CVD) process. Finally, copper is deposited onto the ruthenium layer using an electroplating process or a CVD process. Excess copper, ruthenium, and tantalum lying outside of the trenches and vias is then removed by one or more chemical-mechanical polishing processes to expose the dielectric material between the substrate features, thereby isolating the conductive copper within the substrate features to define the circuit. The polishing process first removes the bulk of the overlying copper layer and then begins to remove first the underlying ruthenium layer and second the underlying tantalum layer, with copper still available to the polishing composition. Towards the end of the polishing process, the dielectric layer is exposed to the polishing composition. Advantageously, the inventive method allows for control of the selectivity for the polishing of the copper, ruthenium, tantalum, and dielectric layers. Selectivity is defined herein as the ratio of the polishing rate of one layer compared to the polishing rate of a second, different layer.

The relative selectivities for the polishing of copper, ruthenium, tantalum, and dielectric layers can be controlled by selection of the abrasive (e.g., either alumina versus a combination of alumina and silica) and by varying the nature and the amounts of the components present in the polishing composition. The copper removal rate can be increased by increasing the amount of abrasive in the polishing composition and/or by incorporating an organic acid into the polishing composition. Alternatively, the copper removal rate can be decreased by increasing the amount of a corrosion inhibitor for copper in the polishing composition. The ruthenium removal rate can be decreased by using an abrasive comprising a combination of alumina and silica. The tantalum removal rate can be increased by increasing the amount of calcium ion or magnesium ion in the polishing composition, or by increasing the amount of oxidizing agent in the polishing composition. The dielectric removal rate can be increased by using an abrasive comprising a combination of alumina and silica and by increasing the total amount of abrasive in the polishing composition. As previously noted herein, polishing compositions comprising ammonium hydroxide exhibit higher removal rates for copper and ruthenium and lower rates for tantalum and silicon oxide-based dielectrics as compared to polishing compositions comprising potassium hydroxide. The relative removal rates of copper, ruthenium, tantalum, and dielectric can be further tuned by utilizing a combination of ammonium hydroxide and potassium hydroxide.

In a preferred embodiment, the inventive polishing composition is used to polish a barrier layer comprising ruthenium and tantalum. A substrate comprising a patterned dielectric layer successively coated with tantalum, ruthenium, and then copper can be polished with any suitable polishing composition that is capable of polishing copper with an efficient removal rate such that most of the copper lying outside of the substrate features is substantially removed from the surface of the substrate. The inventive polishing composition is then used to polish the substrate so as to remove substantially all, or all, of the ruthenium and tantalum, as well as residual copper, that resides outside of the substrate features to expose the underlying dielectric material.

The polishing method of the invention is particularly suited for use in conjunction with a chemical-mechanical polishing apparatus. Typically, the apparatus comprises a platen, which, when in use, is in motion and has a velocity that results from orbital, linear, or circular motion, a polishing pad in contact with the platen and moving with the platen when in motion, and a carrier that holds a substrate to be polished by contacting and moving the substrate relative to the surface of the polishing pad. The polishing of the substrate takes place by the substrate being placed in contact with the polishing pad and the polishing composition of the invention and then the polishing pad moving relative to the substrate, so as to abrade at least a portion of the substrate to polish the substrate.

A substrate can be polished with the chemical-mechanical polishing composition with any suitable polishing pad (e.g., polishing surface). Suitable polishing pads include, for example, woven and non-woven polishing pads. Moreover, suitable polishing pads can comprise any suitable polymer of varying density, hardness, thickness, compressibility, ability to rebound upon compression, and compression modulus. Suitable polymers include, for example, polyvinylchloride, polyvinylfluoride, nylon, fluorocarbon, polycarbonate, polyester, polyacrylate, polyether, polyethylene, polyamide, polyurethane, polystyrene, polypropylene, coformed products thereof, and mixtures thereof.

Desirably, the chemical-mechanical polishing apparatus further comprises an in situ polishing endpoint detection system, many of which are known in the art. Techniques for inspecting and monitoring the polishing process by analyzing light or other radiation reflected from a surface of the substrate being polished are known in the art. Such methods are described, for example, in U.S. Patent 5,196,353, U.S. Patent 5,433,651, U.S. Patent 5,609,511, U.S. Patent 5,643,046, U.S. Patent 5,658,183, U.S. Patent 5,730,642, U.S. Patent 5,838,447, U.S. Patent 5,872,633, U.S. Patent 5,893,796, U.S. Patent 5,949,927, and U.S. Patent 5,964,643. Desirably, the inspection or monitoring of the progress of the polishing process with respect to a substrate being polished enables the determination of the polishing end-point, i.e., the determination of when to terminate the polishing process with respect to a particular substrate.

The following examples further illustrate the invention but, of course, should not be construed as in any way limiting its scope.

In Examples 1-3 below, the polishing experiments generally involved use of a 50.8 cm (20 inch) diameter Logitech polishing tool with 23.5 kPa (3.1 psi) downforce pressure of the substrate against the polishing pad, 90 rpm platen speed, 93 rpm carrier speed, 180 mL/min polishing composition flow rate, and use of a hard CMP pad. In Example 4 below, the polishing experiments generally involved use of a Reflexion polishing tool with 10.4 kPa (1.5 psi) downforce pressure of the substrate against the polishing pad, 79 rpm platen speed, 81 rpm carrier speed, 250 mL/min polishing composition flow rate, and use of a Politex CMP pad.

### EXAMPLE 1

This example demonstrates the effect of calcium ion on the removal rates observed for copper, ruthenium, tantalum, and a silicon oxide dielectric material generated from tetraethylorthosilicate achievable by the method of the invention. The silicon oxide dielectric material is referred to as "TEOS" herein.

Four similar sets of four substrates, each of which substrates separately comprised copper, ruthenium, tantalum, and TEOS, were polished with the control polishing composition containing no calcium ion and with the inventive polishing compositions containing varying amounts of calcium ion. Each of the compositions comprised 0.7 wt.% α-alumina treated with a negatively-charged polymer, 0.8 wt.% tartaric acid, 3 wt.% hydrogen peroxide, 0.0303 wt.% benzotriazole, and 0.05 wt.% Alcosperse 630 polyacrylic acid dispersant, adjusted to a pH of 8.4 with ammonium hydroxide, in water. The calcium ion source was calcium acetate monohydrate.

Following polishing, the removal rates (RR) for copper, ruthenium, tantalum, and TEOS were determined for each of the polishing compositions, and the results are summarized in Table 1.

**Table 1**

| Amount of Calcium Ion (ppm) | Cu RR (Å/min) | Ru RR (Å/min) | Ta RR (Å/min) | TEOS RR (Å/min) |
|---|---|---|---|---|
| None (control) | 330 | 290 | 60 | 35 |
| 20 (invention) | 265 | 305 | 180 | 40 |
| 50 (invention) | 320 | 310 | 345 | 50 |
| 80 (invention) | 270 | 330 | 385 | 50 |

As is apparent from the results set forth in Table 1, increasing presence of 80 ppm calcium ion resulted in an increase in the removal rate observed for tantalum approximately 6.4 times greater than that observed for the control polishing composition containing no calcium ion. The removal rate observed for ruthenium increased approximately 1.2 times that of the control polishing composition, while the removal rate observed for copper decreased somewhat with the presence of calcium ion. The removal rate observed for TEOS in the presence of 80 ppm of calcium ion was approximately 1.4 times the removal rate observed for the control polishing composition but remained low in comparison with the copper, ruthenium, and tantalum removal rates.

### EXAMPLE 2

This example demonstrates the effect of adding silica abrasives to a polishing composition comprising α-alumina on the removal rates observed for copper, ruthenium, tantalum, and TEOS.

Two similar sets of four substrates, each of which substrates separately comprised copper, ruthenium, tantalum, and TEOS, were polished with two different polishing compositions (Polishing Compositions 2A and 2B). Each of the compositions comprised 0.8 wt.% tartaric acid, 3 wt.% hydrogen peroxide, 0.0453 wt.% benzotriazole, 200 ppm of calcium acetate monohydrate, 0.6 wt.% of an aminophophonic acid, and 0.05 wt.% Alcosperse 630 polyacrylic acid dispersant, adjusted to a pH of 8.4 with ammonium hydroxide, in water. Polishing Composition 2A further comprised 0.7 wt.% α-alumina treated with a negatively-charged polymer, and no silica. Polishing Composition 2B further comprised 1 wt.% α-alumina treated with a negatively-charged polymer and 1.5 wt.% of a condensation-polymerized silica.

Following polishing, the removal rates (RR) for copper, ruthenium, tantalum, and TEOS were determined for each of the polishing compositions, and the results are summarized in Table 2.

**Table 2**

| Polishing Composition | Cu RR (Å/min) | Ru RR (Å/min) | Ta RR (Å/min) | TEOS RR (Å/min) |
|---|---|---|---|---|
| 2A (invention) | 370 | 315 | 425 | 30 |
| 2B (invention) | 320 | 200 | 450 | 75 |

As is apparent from the results set forth in Table 2, changing the abrasive from 0.7 wt.% of polymer-treated α-alumina to a combination of 1 wt.% of polymer-treated α-alumina and 1.5 wt.% of a condensation-polymerized silica decreased the removal rates observed for copper and ruthenium by approximately 14% and 37%, respectively, as compared to the polishing composition without silica, but resulted in an increase in the removal rates observed for tantalum and TEOS of approximately 6% and 150%, respectively, as compared to the polishing composition without silica.

### EXAMPLE 3

This example demonstrates the effect of amphiphilic nonionic surfactants on removal rates for copper, ruthenium, tantalum, and TEOS.

Three similar sets of four substrates, each of which substrates separately comprised copper, ruthenium, tantalum, and TEOS, were polished three different polishing compositions (Polishing Compositions 3A, 3B, and 3C). Each of the compositions comprised 1.4 wt.% of α-alumina treated with a negatively-charged polymer, 0.8 wt.% of tartaric acid, 3 wt.% of hydrogen peroxide, 0.085 wt.% benzotriazole, 200 ppm calcium acetate monohydrate, and 0.05 wt.% of Alcosperse 630 polyacrylic acid dispersant, adjusted to a pH of 8.4 with 0.3 wt.% ammonium hydroxide, in water. Polishing Compositions 3B and 3C further comprised one of two Pluronic^{®} surfactants (BASF, Ludwigshafen, Germany). Polishing Composition 3B (invention) further comprised 150 ppm of Pluronic^{®} L31 surfactant having a HLB of 5 and a molecular weight of 1,100. Polishing Composition 3C (invention) further comprised 150 ppm of Pluronic^{®} F103 surfactant having a HLB > 24 and a molecular weight of 14,600.

Following polishing, the removal rates (RR) for copper, ruthenium, tantalum, and TEOS were determined for each of the polishing compositions, and the results are summarized in Table 3.

**Table 3**

| Polishing Composition | Cu RR (Å/min) | Ru RR (Å/min) | Ta RR (Å/min) | TEOS RR (Å/min) |
|---|---|---|---|---|
| 3A (control) | 96 | 455 | 299 | 64 |
| 3B (invention) | 55 | 477 | 283 | 89 |
| 3C (invention) | 50 | 459 | 309 | 73 |

As is apparent from the results set forth in Table 3, Polishing Compositions 3B and 3C, containing 150 ppm of two different amphiphilic nonionic surfactants, exhibited copper removal rates that were 43% and 47%, respectively, of the copper removal rate exhibited by the control polishing composition. The observed removal rates for ruthenium and tantalum varied by less than 4%. The observed removal rate for TEOS increased up to 25% but remained relatively low.

### EXAMPLE 4

This example demonstrates that the presence of amphiphilic nonionic surfactants in the polishing compositions of the invention reduces copper dishing in barrier polishing.

Similar substrates were prepared by sequentially depositing tantalum, ruthenium, and then copper onto a patterned TEOS layer. The copper was removed to expose the ruthenium layer using a conventional copper polishing composition. The substrates were then further polished with different polishing compositions (Polishing Compositions 4A-4C). Polishing composition 4A (control) comprised 1.4 wt.% α-alumina treated with a negatively-charged polymer, 0.8 wt.% tartaric acid, 3 wt.% hydrogen peroxide, 0.085 wt.% benzotriazole, 200 ppm calcium acetate monohydrate, and 0.05 wt.% Alcosperse 630 polyacrylic acid dispersant, adjusted to a pH of 8.4 with 0.3 wt.% ammonium hydroxide, in water. Polishing Compositions 4B and 4C further comprised one of two Pluronic^{®} surfactants (BASF, Ludwigshafen, Germany). Polishing Composition 4B (invention) further comprised 150 ppm of Pluronic^{®} L31 surfactant having a HLB of 5 and a molecular weight of 1,100. Polishing Composition 4C (invention) further comprised 150 ppm of Pluronic^{®} F103 surfactant having a HLB > 24 and a molecular weight of 14,600.

The amount of copper dishing (in Angstroms) was measured (a) before polishing, (b) after 120 seconds of polishing, and (c) after 240 seconds of polishing. The Δdishing (change in dishing) at 120 seconds and 240 seconds of polishing was calculated by subtracting the amount of copper dishing after 120 seconds and 240 seconds from the initial amount of copper dishing, and the results are summarized in Table 4.

**Table 4**

| Polishing Composition | ΔDishing at 120 s (Å) | ΔDishing at 240 s (Å) |
|---|---|---|
| 4A (control) | 1033 | 1564 |
| 4B (invention) | 439 | 755 |
| 4C (invention) | 110 | -87 |

As is apparent from the results set forth in Table 4, the control polishing composition exhibited copper dishing that increased over time. Polishing Composition 4B exhibited less than 50% of the amount of copper dishing at both 120 s and 240 s of polishing as compared with the control polishing composition. Polishing Composition 4C exhibited 10% of the amount of copper dishing at 120 s of polishing as compared with the control polishing composition, and exhibited a reduction in copper dishing of 87 Å at 240 s of polishing.

## Claims

1. A chemical-mechanical polishing composition comprising:
(a) 0.01 wt.% to 10 wt.% of an abrasive, wherein the abrasive comprises α-alumina and at least a portion of the α-alumina is treated with a negatively-charged polymer or copolymer,
(b) 0.01 wt.% to 10 wt.% of an oxidizing agent,
(c) 1 ppm to 5000 ppm of an amphiphilic nonionic surfactant comprising a head group and a tail group,
(d) 1 ppm to 500 ppm of calcium ion or magnesium ion,
(e) 0.001 wt.% to 0.5 wt.% of a corrosion inhibitor for copper, and
(f) water,
wherein the pH of the polishing composition is 6 to 12.

2. The polishing composition of claim 1, wherein the α-alumina is treated with a negatively-charged polymer or copolymer selected from the group consisting of poly(2-acrylamido-2-methylpropane sulfonic acid) and polystyrenesulfonic acid.

3. The polishing composition of claim 1, wherein the polishing composition further comprises silica.

4. The polishing composition of claim 1, wherein the oxidizing agent is hydrogen peroxide, and wherein the polishing composition comprises 0.1 wt.% to 5 wt.% of hydrogen peroxide.

5. The polishing composition of claim 1, wherein the polishing composition further comprises an organic acid selected from the group consisting of malonic acid, succinic acid, adipic acid, lactic acid, malic acid, citric acid, glycine, aspartic acid, gluconic acid, iminodiacetic acid, fumaric acid, and combinations thereof.

6. The polishing composition of claim 1, wherein the polishing composition further comprises tartaric acid.

7. The polishing composition of claim 1, wherein the amphiphilic nonionic surfactant is a block or graft copolymer comprising polyoxyethylene and polyethylene.

8. The polishing composition of claim 7, wherein the amphiphilic nonionic surfactant has a HLB of 8 or more.

9. The polishing composition of claim 7, wherein the amphiphilic nonionic surfactant has a molecular weight of 5,000 Daltons or more.

10. The polishing composition of claim 1, wherein the corrosion inhibitor for copper is at least one heterocyclic compound selected from the group consisting of benzotriazole, 4-methylbenzotriazole, 5-methylbenzotriazole, 5-chlorobenzotriazole, and combinations thereof.

11. The polishing composition of claim 10, wherein the corrosion inhibitor for copper is benzotriazole, and wherein the polishing composition comprises 0.005 wt.% to 0.1 wt.% of benzotriazole.

12. The polishing composition of claim 1, wherein the polishing composition comprises 5 ppm to 250 ppm of calcium ion.

13. The polishing composition of claim 1, wherein the polishing composition further comprises ammonium hydroxide.

14. A method of chemically-mechanically polishing a substrate, which method comprises:
(i) providing a substrate,
(ii) providing a chemical-mechanical polishing composition comprising:
(a) 0.01 wt.% to 10 wt.% of an abrasive, wherein the abrasive comprises α-alumina and at least a portion of the α-alumina is treated with a negatively-charged polymer or copolymer,
(b) 0.01 wt.% to 10 wt.% of an oxidizing agent,
(c) 1 ppm to 5000 ppm of an amphiphilic nonionic surfactant comprising a head group and a tail group,
(d) 1 ppm to 500 ppm of calcium ion or magnesium ion,
(e) 0.001 wt.% to 0.5 wt.% of a corrosion inhibitor for copper, and
(f) water,
wherein the pH of the polishing composition is 6 to 12,
(iii) contacting the substrate with a polishing pad with the polishing composition therebetween,
(iv) moving the polishing pad and polishing composition relative to the substrate, and
(iv) abrading at least a portion of the substrate to polish the substrate.

## Patentansprüche

1. Chemisch-mechanische Polierzusammensetzung, umfassend:
(a) 0,01 Gew.-% bis 10 Gew.-% eines Poliermittels, wobei das Poliermittel Alpha-Aluminiumoxid umfasst und wenigstens ein Teil des Alpha-Aluminiumoxids mit einem negativ geladenen Polymer oder Copolymer behandelt ist,
(b) 0,01 Gew.-% bis 10 Gew.-% eines Oxidationsmittels,
(c) 1 ppm bis 5000 ppm eines amphiphilen nichtionischen oberflächenaktiven Mittels, das eine Kopfgruppe und eine Schwanzgruppe umfasst,
(d) 1 ppm bis 500 ppm eines Calcium-Ions oder Magnesium-Ions,
(e) 0,001 Gew.-% bis 0,5 Gew.-% eines Korrosionsinhibitors für Kupfer, und
(f) Wasser,
wobei der pH-Wert der Polierzusammensetzung 6 bis 12 ist.

2. Polierzusammensetzung nach Anspruch 1, wobei das Alpha-Aluminiumoxid mit einem negativ geladenen Polymer oder Copolymer behandelt ist, das aus der Gruppe bestehend aus Poly(2-Acrylamido-2-methylpropansulfonsäure) und Polystyrolsulfonsäure ausgewählt ist.

3. Polierzusammensetzung nach Anspruch 1, wobei die Polierzusammensetzung ferner Siliciumdioxid umfasst.

4. Polierzusammensetzung nach Anspruch 1, wobei das Oxidationsmittel Wasserstoffperoxid ist, und wobei die Polierzusammensetzung 0,1 Gew.-% bis 5 Gew.-% Wasserstoffperoxid umfasst.

5. Polierzusammensetzung nach Anspruch 1, wobei die Polierzusammensetzung ferner eine organische Säure umfasst, die aus der Gruppe bestehend aus Malonsäure, Bernsteinsäure, Adipinsäure, Milchsäure, Äpfelsäure, Zitronensäure, Glycin, Asparaginsäure, Gluconsäure, Iminodiessigsäure, Fumarsäure und Kombinationen davon ausgewählt ist.

6. Polierzusammensetzung nach Anspruch 1, wobei die Polierzusammensetzung ferner Weinsäure umfasst.

7. Polierzusammensetzung nach Anspruch 1, wobei das amphiphile nichtionische oberflächenaktive Mittel ein Block- oder Pfropfcopolymer ist, das Polyoxyethylen und Polyethylen umfasst.

8. Polierzusammensetzung nach Anspruch 7, wobei das amphiphile nichtionische oberflächenaktive Mittel einen HLB-Wert von 8 oder mehr hat.

9. Polierzusammensetzung nach Anspruch 7, wobei das amphiphile nichtionische oberflächenaktive Mittel ein Molekulargewicht von 5,000 Dalton oder mehr hat.

10. Polierzusammensetzung nach Anspruch 1, wobei der Korrosionsinhibitor für Kupfer mindestens eine heterozyklische Verbindung ist, die aus der Gruppe bestehend aus Benzotriazol, 4-Methylbenzotriazol, 5-Methylbenzotriazol, 5-Chlorobenzotrioazol und Kombinationen davon ausgewählt ist.

11. Polierzusammensetzung nach Anspruch 10, wobei der Korrosionsinhibitor für Kupfer Benzotriazol ist, und wobei die Polierzusammensetzung 0,005 Gew.-% bis 0,1 Gew.-% Benzotriazol umfasst.

12. Polierzusammensetzung nach Anspruch 1, wobei die Polierzusammensetzung 5 ppm bis 250 ppm eines Calcium-Ions umfasst.

13. Polierzusammensetzung nach Anspruch 1, wobei die Polierzusammensetzung ferner Ammoniumhydroxid umfasst.

14. Verfahren zur chemisch-mechanischen Polierung eines Substrats, wobei das Verfahren umfasst:
(i) Bereitstellen eines Substrats,
(ii) Bereitstellen einer chemisch-mechanischen Polierzusammensetzung umfassend:
(a) 0,01 Gew.-% bis 10 Gew.-% eines Poliermittels, wobei das Poliermittel Alpha-Aluminiumoxid umfasst und wenigstens ein Teil des Alpha-Aluminiumoxids mit einem negativ geladenen Polymer oder Copolymer behandelt ist,
(b) 0,01 Gew.-% bis 10 Gew.-% eines Oxidationsmittels,
(c) 1 ppm bis 5000 ppm eines amphiphilen nichtionischen oberflächenaktiven Mittels, das eine Kopfgruppe und eine Schwanzgruppe umfasst,
(d) 1 ppm bis 500 ppm eines Calcium-Ions oder Magnesium-Ions,
(e) 0,001 Gew.-% bis 0,5 Gew.-% eines Korrosionsinhibitors für Kupfer, und
(f) Wasser,
wobei der pH-Wert der Polierzusammensetzung 6 bis 12 ist,
(iii) Kontaktieren des Substrats mit einem Polierpad mit der Polierzusammensetzung dazwischen,
(iv) Bewegen des Polierpads und der Polierzusammensetzung relativ zum Substrat, und
(v) Abschleifen wenigstens eines Teils des Substrats, um das Substrat zu polieren.

## Revendications

1. Composition de polissage mécano-chimique comprenant :
(a) de 0,01 % en masse à 10 % en masse d'un abrasif, dans laquelle l'abrasif comprend de l'alumine α et au moins une partie de l'alumine α est traitée avec un polymère ou copolymère chargé négativement,
(b) de 0,01 % en masse à 10 % en masse d'un agent oxydant,
(c) de 1 ppm à 5 000 ppm d'un tensioactif non ionique amphiphile comprenant un groupe de tête et un groupe de queue,
(d) de 1 ppm à 500 ppm d'ion calcium ou d'ion magnésium,
(e) de 0,001 % en masse à 0,5 % en masse d'un inhibiteur de corrosion pour le cuivre, et
(f) de l'eau,
dans laquelle le pH de la composition de polissage est de 6 à 12.

2. Composition de polissage selon la revendication 1, dans laquelle l'alumine α est traitée avec un polymère ou copolymère chargé négativement choisi dans le groupe constitué de poly(acide 2-acrylamido-2-méthylpropanesulfonique) et de poly(acide styrènesulfonique).

3. Composition de polissage selon la revendication 1, dans laquelle la composition de polissage comprend de plus de la silice.

4. Composition de polissage selon la revendication 1, dans laquelle l'agent oxydant est le peroxyde d'hydrogène, et dans laquelle la composition de polissage comprend de 0,1 % en masse à 5 % en masse de peroxyde d'hydrogène.

5. Composition de polissage selon la revendication 1, dans laquelle la composition de polissage comprend de plus un acide organique choisi dans le groupe constitué de l'acide malonique, de l'acide succinique, de l'acide adipique, de l'acide lactique, de l'acide malique, de l'acide citrique, de la glycine, de l'acide aspartique, de l'acide gluconique, de l'acide iminodiacétique, de l'acide fumarique et de combinaisons de ceux-ci.

6. Composition de polissage selon la revendication 1, dans laquelle la composition de polissage comprend de plus de l'acide tartarique.

7. Composition de polissage selon la revendication 1, dans laquelle le tensioactif non ionique amphiphile est un copolymère séquencé ou greffé comprenant du polyoxyéthylène et du polyéthylène.

8. Composition de polissage selon la revendication 7, dans laquelle le tensioactif non ionique amphiphile présente un HLB de 8 ou supérieur.

9. Composition de polissage selon la revendication 7, dans laquelle le tensioactif non ionique amphiphile présente une masse moléculaire de 5 000 Daltons ou supérieure.

10. Composition de polissage selon la revendication 1, dans laquelle l'inhibiteur de corrosion pour le cuivre est au moins un composé hétérocyclique choisi dans le groupe constitué du benzotriazole, du 4-méthylbenzotriazole, du 5-méthylbenzotriazole, du 5-chlorobenzotriazole et de combinaisons de ceux-ci.

11. Composition de polissage selon la revendication 10, dans laquelle l'inhibiteur de corrosion pour le cuivre est le benzotriazole, et dans laquelle la composition de polissage comprend de 0,005 % en masse à 0,1 % en masse de benzotriazole.

12. Composition de polissage selon la revendication 1, dans laquelle la composition de polissage comprend de 5 ppm à 250 ppm d'ion calcium.

13. Composition de polissage selon la revendication 1, dans laquelle la composition de polissage comprend de plus de l'hydroxyde d'ammonium.

14. Procédé de polissage mécano-chimique d'un substrat, lequel procédé comprend les étapes consistant :
(i) à fournir un substrat
(ii) à fournir une composition de polissage mécano-chimique comprenant :
(a) de 0,01 % en masse à 10 % en masse d'un abrasif, dans lequel l'abrasif comprend de l'alumine α et au moins une partie de l'alumine α est traitée avec un polymère ou copolymère chargé négativement,
(b) de 0,01 % en masse à 10 % en masse d'un agent oxydant,
(c) de 1 ppm à 5 000 ppm d'un tensioactif non ionique amphiphile comprenant un groupe de tête et un groupe de queue,
(d) de 1 ppm à 500 ppm d'ion calcium ou d'ion magnésium,
(e) de 0,001 % en masse à 0,5 % en masse d'un inhibiteur de corrosion pour le cuivre, et
(f) de l'eau,
dans lequel le pH de la composition de polissage est de 6 à 12,
(iii) à mettre le substrat en contact avec un disque de polissage avec la composition de polissage entre ceux-ci,
(iv) à déplacer le disque de polissage et la composition de polissage par rapport au substrat, et
(iv) à abraser au moins une partie du substrat pour polir le substrat.
